# EUROPÄISCHE PATENTANMELDUNG

(11) **EP 0 773 378 A1**
(43) Veröffentlichungstag der Anmeldung: **14.05.1997**
(21) Anmeldenummer: 96117474.5
(22) Anmeldetag: 31.10.1996
(51) Int. Cl.: F16C 29/06

(54) **Linearführungseinheit**

(30) Priorität: 11.11.1995 DE 29517901 U
(71) Anmelder: Manfred Föhrenbach GmbH, 79843 Löffingen-Unadingen (DE)
(72) Erfinder: Föhrenbach, Manfred, 79843 Löffingen-Unadingen (DE)
(74) Vertreter: Patentanwälte Westphal, Buchner, Mussgnug Neunert, Göhring

(57) **Zusammenfassung**

Linearführungseinheit mit einem Führungslineal sowie einem Laufwagen, der mittels Wälzlager am Führungslineal verschieblich gelagert ist, bei der das Führungslineal (2) zwei gegenüberliegend angeordnete und sich in Längsrichtung durchgehend erstreckende zylindersegmentförmige Führungsbahnen (20) aufweist und der Laufwagen (4) zumindest zwei Kugelumlaufbüchsen (30) besitzt, die mit den Führungsbahnen (20) zusammenwirken.

## Beschreibung

Die Erfindung betrifft eine Linearführungseinheit gemäß Oberbegriff des Anspruchs 1.

Derartige Linearführungseinheiten sind universell für eine große Anzahl von Einsatzzwecken geeignet und dienen dazu, eine hochpräzise Führung für eine lineare Verschiebebewegung zu realisieren. Zu diesem Zweck ist ein hochpräzise gefertigtes Führungslineal vorgesehen, auf dem ein Laufwagen verschieblich gelagert ist. Häufig werden hierfür Wälzlager eingesetzt, die höchsten Genauigkeitsanforderungen entsprechen und zudem wenig Reibungsverluste aufweisen.

Es sind eine Vielzahl von Systemen erhältlich, die sich teilweise in der konkreten Ausgestaltung der Lagerung unterscheiden. Beispielsweise kann das Führungslineal mit V-förmigen, hochpräzise ausgeführten Längsnuten versehen sein, in denen die Rollen eines im Laufwagen befestigte Rollenlagers abwälzen können.

Diesen bekannten Linearführungseinheiten haftet der Nachteil an, daß sie in ihrer Herstellung sehr teuer sind. So sind Wälzlager als solche relativ teuer, auch ist aufgrund der Vielzahl der verwendeten Elemente der Montageaufwand sehr hoch.

Der Erfindung lag daher das Problem zugrunde, eine Linearführungseinheit der eingangs genannten Art derart weiterzuentwickeln, daß sie die geschilderten Nachteile nicht mehr aufweist. Insbesondere soll sie aus möglichst wenigen, einfach aufgebauten Elementen zusammensetzbar und somit wirtschaftlich herstellbar sein.

Das Problem wird mit einer Linearführungseinheit gelöst, die die Merkmale des Anspruchs 1 aufweist.

Vorteilhafte Ausführungsvarianten der Linearführungseinheit sind durch die Merkmale der Unteransprüche angegeben.

Die Erfindung basiert auf die Idee, als Wälzlager Kugelumlaufbüchsen vorzusehen, die mit zylindersegmentförmigen Führungsbahnen, die am Führungslineal angeordnet sind, zusammenzuwirken. Der besondere Vorteil der Kugelumlaufbüchsen besteht darin, daß sie vergleichsweise billig herstellbar sind. In der Regel können diese als Kunststoff-Spritzgießteil mit integral angeformten Kugelumlaufbahnen konzipiert sein, in die eine Vielzahl, hintereinander umlaufender Kugeln eingesetzt sind. Durch die Vielzahl der Kugeln ergibt sich eine optimale Lastverteilung mit vergleichsweise geringer spezifischer Belastung der Lagerstelle. Gleichzeitig kann eine äußerst hohe Präzision erreicht werden, wie sie bei vielen Anwendungsfällen gefordert ist.

Weiterhin ist die Gestaltung des Führungslineals hinsichtlich der Führungsbahnen kostengünstig herstellbar, da lediglich zwei gegenüberliegende, vorzugsweise an den Schmalseiten des Führungslineals angeordnete Zylindersegmente angebracht werden müssen, die sich in Längsrichtung durchgehend erstrecken. Die zylindersegmentförmigen Führungsbahnen können hierbei unabhängig vom Führungslineal und hinsichtlich der als Lagerflächen wirkenden Mantelfläche hochpräzise vorgefertigt sein.

Eine derartige Linearführungseinheit besteht somit aus wenigen Bauteilen, die zudem kostengünstig herstellbar sind.

Gemäß einer bevorzugten Ausführungsform werden die beiden Führungsbahnen jeweils in einem Wickelsektor von etwas weniger als 180°, vorzugsweise um 160°, von den Kugelumlaufbüchsen umfaßt. Ein derartig großer Umschließungswinkel stellt eine hohe Führungsgenauigkeit sicher, da die beiden Teilsektoren der gegenüberliegend angeordneten Führungsbahnen zusammengenommen eine beinahe vollständig umlaufende Abstützung nach allen Richtungen hin gewährt.

Bevorzugt sind die Kugelumlaufbüchsen jeweils aus zwei oder drei Teilsegmenten aufgebaut, wobei jedes Segment eine mit Kugeln versehene Kugelumlaufbahn aufweist. Durch diese mehrfache Anordnung von Segmenten ist eine äußerst gleichmäßige Lastverteilung erreicht. Die einzelnen Segmente liegen in Umfangsrichtung gesehen nebeneinander, wobei sie sich nicht unmittelbar berühren müssen, sondern auch zwischen jeweils zwei benachbarten Segmenten ein Spalt verbleiben kann. Von wesentlicher Bedeutung ist lediglich die Tatsache, daß jede der Kugelumlaufbüchsen zwei oder mehr Kugelreihen besitzt und somit an zwei oder mehr Winkelpositionen eine Kraftübertragung zwischen dem Laufwagen und dem Führungslineal erzielt wird.

Je nach axialer Ertreckung des Laufwagens ist es nicht erforderlich, die Kugelumlaufbüchsen axial durchgehend zu gestalten. Vielmehr ist es in den meisten Fällen ausreichend, den Laufwagen in axialer Richtung jeweils an zwei voneinander beabstandeten Positionen, und zwar in der Nähe der Stirnseiten zu lagern. Gegenüber einer in axialer Richtung durchgängigen Lagerung verdoppelt sich zwar die Zahl der Kugelumlaufbüchsen bzw. Segmente, jedoch läßt sich insgesamt das Gewicht des Laufwagens reduzieren.

Bevorzugt besitzen die Kugelumlaufbüchsen bzw. die Segmente Positionierelemente, die mit korrespondieren Aufnahmelementen des Laufwagens zusammenwirken und so die Montage erheblich vereinfachen. Beispielsweise können Positionierelemente als axialer und/oder radialer Bund gestaltet sein, welcher bei der Ausführung der Kugelumlaufbüchsen in Form von Spritzgußteilen unmittelbar bei der Herstellung mitangeformt werden kann. Damit ist eine sichere Fixierung ohne zusätzlichen Aufwand an Bauelementen realisierbar. Es ist lediglich erforderlich, korrespondierende Aufnahmeelemente in Form von Nuten und/oder Absatzstegen im Laufwagen vorzusehen. Derartige Ausnehmungen lassen sich kostengünstig herstellen, so daß insgesamt der Fertigungsaufwand äußerst niedrig gehalten werden kann.

Weitere bevorzugte Maßnahmen sind darauf gerichtet, das Eindringen von festen und/oder flüssigen Partikeln in den Lagerbereich zu verhindern und somit die Lebensdauer zu erhöhen. Bevorzugt sind am Laufwagen jeweils stirnseitig Dichtungen zwischen dem Laufwagen und dem Führungslineal vorgesehen, wobei zusätzliche, auf die Führungsbahnen ausgerichtete Abstreifer, vorzugsweise in Form von Bürsten, vorhanden sind. Die Abstreifer gleiten bei der Verschiebebewegung an den Führungsbahnen entlang und entfernen eventuell anhaftende feste und/oder flüssige Partikel. Abdichtelemente und/oder Abstreifer können als selbständige Bauelemente außen am Führungswagen jeweils stirnseitig angebracht werden. Auch ist es möglich, die Kugelumlaufbüchsen bzw. die Segmente unmittelbar damit auszustatten, so daß sich der Fertigungsaufwand weiter reduzieren läßt.

Bevorzugt sind die Führungsbahnen als kreiszylinderförmige Stäbe (Rundstäbe) ausgeführt, die in korrespondierend gestaltete Nuten am Führungslineal eingesetzt sind. Besonders vorteilhaft haben sich Nuten mit rechteckförmigem Querschnitt erwiesen, in die die Stäbe eingepreßt sind. Die Nuttiefe ist hierbei so gewählt, daß die Stäbe geringfügig mehr als zur Hälfte eintauchen, so daß sie einerseits radial gegenüberliegend fixiert sind und andererseits das nach außen weisende Segment beinahe halbkreisförmig umfaßt werden kann. Bei entsprechender Auslegung ist ohne weiteres ein Winkelsektor von etwa 160° als Lagerbereich nutzbar.

Die Erfindung wird nachstehend anhand der in den Figuren schematisch dargestellten Ausführungsbeispiele erläutert. Es zeigen:
- Fig. 1:: Linearführungseinheit, erste Ausführungsvariante, Ansicht von vorne und
- Fig. 2:: Linearführungseinheit, zweite Ausführungsvariante, Ansicht von vorne.

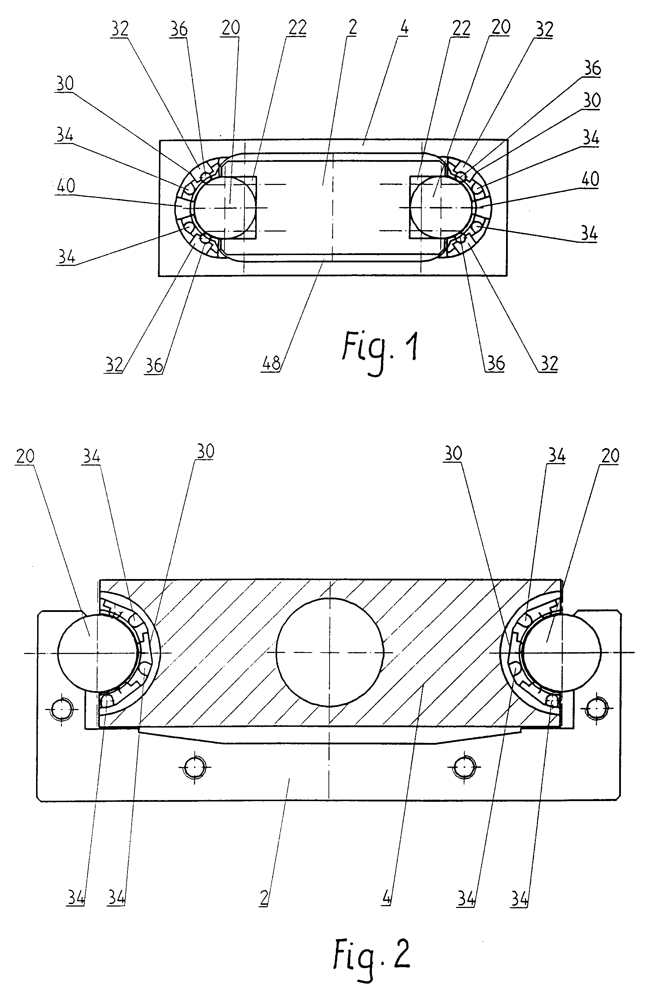

Die beiden in den Figuren dargestellten Ausführungsvarianten basieren auf dem übereinstimmenden Lagerprinzip, wobei die erste Ausführungsvariante gemäß Fig. 1 einen Laufwagen 4 besitzt, der das Führungslineal 2 vollständig umschließt, wohingegen bei der zweiten Ausführungsvariante gemäß Fig. 2 der Laufwagen 4 innerhalb des Führungslineals 2 gelagert ist. Im übrigen sind in beiden Figuren funktionell gleichwirkende Elemente jeweils mit derselben Bezugsziffer versehen.

Die in Fig. 1 dargestellte Ausführungsvariante weist einen Laufwagen 4 auf, der auf einem Führungslineal 2 axial verschieblich gelagert ist. Das Führungslineal 2 besitzt zwei gegenüberliegend angeordnete und sich in Längsrichtung durchgehend erstreckende Nuten 22, die einen rechteckförmigen Querschnitt besitzen. In die Nuten 22 sind jeweils als Führungsbahnen wirkende Stäbe 20 eingesetzt. Die Stäbe 20 sind gehärtet und geschliffen. Sie sind hinsichtlich ihres Außendurchmessers derart auf die Breite der Nuten 22 abgestimmt, daß sie im eingesetzten Zustand klemmend festgehalten sind. Die Nuttiefe ist so gewählt, daß die Stäbe 20 etwas mehr als zur Hälfte eintauchen und damit der nach außen überstehende Winkelsektor im Querschnitt beinahe 180° beträgt. Als nutzbare Lagerfläche steht ein Winkelsektor von ca. 160° zur Verfügung.

Der Laufwagen 4 besitzt eine zentrale Führungsöffnung 48, durch die das Führungslineal 2 hindurchgeführt ist. Der Laufwagen 4 besitzt insgesamt vier Kugelumlaufbüchsen 30, wovon in der Darstellung gemäß Fig. 1 lediglich die beiden vorneliegenden dargestellt sind. Jede der Kugelumlaufbüchsen 30 ist aus zwei Segmenten 32 aufgebaut, die einander nicht berühren. Hierfür sind in den Laufwagen 4 Ausnehmungen 40 eingearbeitet, die die Segmente 32 aufnehmen und infolge ihrer Konturierung auch fixieren.

Jedes Segment 32 besitzt eine in sich geschlossene Kugelumlaufbahn 34, in der eine Vielzahl von Kugeln 36 eingesetzt sind. Im vorliegenden Ausführungsbeispiel sind demnach sowohl im vorderen (gemäß Fig. 1 sichtbaren), als auch im hinteren Bereich jeweils 4 Lagerstellen vorhanden, die durch die jeweils gerade auf den Stäben 20 aufliegenden Kugeln definiert sind.

Die in Fig. 2 dargestellte Ausführungsvariante besitzt einen Laufwagen 4, der weitgehend innerhalb eines Führungslineals 2 in axialer Richtung verschiebbar gelagert ist. Das Führungslineal 2 ist im Querschnitt U-förmig gestaltet, wobei die beiden sich hierbei ergebenden Schenkel einwärtsweisend zwei Führungsstäbe 20 tragen. Der Laufwagen 4 ist an zwei Kugelumlaufbüchsen 30 geführt, die auf die Stäbe 20 ausgerichtet sind und diese jeweils zu etwa 180° umschließen. Im Gegensatz zu dem vorhergehenden Ausführungsbeispiel sind die Kugelumlaufbüchsen einstückig gestaltet, wobei jedoch jeweils drei Kugelumlaufbahnen 34 eingearbeitet sind. In diesem Falle ergeben sich somit je Stab 20 drei Auflagebereiche.

Hier nicht näher dargestellt sind einerseits die Maßnahmen zum Fixieren der Kugelumlaufbüchsen 30 bzw. der Segmente 32 sowie Maßnahmen zum Abdichten der Lagerstelle gegen eindringende Partikel bzw. die Gestaltung der Abstreifer.

Aus dem vorstehenden ergibt sich, daß unter Verwendung des erfindungsgemäßen Konzepts hochpräzise wirkende, jedoch einfach gestaltete Linearführungseinheiten gebaut werden können, die eine hohe Wirtschaftlichkeit besitzen.

### Bezugszeichenliste

- 2: Führungslineal
- 4: Laufwagen
- 20: Führungsbahn, Stab
- 22: Nut
- 30: Kugelumlaufbüchse
- 32: Segment
- 34: Kugelumlaufbahn
- 36: Kugel
- 40: Ausnehmung
- 48: Führungsöffnung

## Patentansprüche

1. Linearführungseinheit mit einem Führungslineal sowie einem Laufwagen, der mittels Wälzlager am Führungslineal verschieblich gelagert ist, dadurch gekennzeichnet,
- daß das Führungslineal (2) zwei gegenüberliegend angeordnete und sich in Längsrichtung durchgehend erstreckende zylindersegmentförmige Führungsbahnen (20) aufweist und
- daß der Laufwagen (4) zumindest zwei Kugelumlaufbüchsen (30) besitzt, die mit den Führungsbahnen (20) zusammenwirken.

2. Linearführungseinheit nach Anspruch 1, dadurch gekennzeichnet, daß die Kugelumlaufbüchsen (30) die Führungsbahnen (20) jeweils in einem Winkelsektor von etwas weniger als 180° Grad, vorzugsweise um 160° Grad, umfassen.

3. Linearführungseinheit nach Anspruch 1 oder 2, dadurch gekennzeichnet, daß die Kugelumlaufbüchsen (30) jeweils aus zumindest zwei in Umfangsrichtung nebeneinanderliegenden Segmenten (32) gebildet sind, wobei jedes Segment (32) eine mit Kugeln (36) versehene Kugelumlaufbahn (34) aufweist.

4. Linearführungseinheit nach einem der vorstehenden Ansprüche, dadurch gekennzeichnet, daß der Laufwagen (4) in axialer Richtung in jeweils zwei voneinander beabstandeten, den beiden Stirnseiten zugeordneten Abschnitten gelagert ist.

5. Linearführungseinheit nach einem der vorstehenden Ansprüche, dadurch gekennzeichnet, daß die Kugelumlaufbüchsen (30) bzw. die Segmente (32) Positionierelemente aufweisen, die mit korrespondierenden Aufnahmeelementen des Laufwagens (4) zusammenwirken.

6. Linearführungseinheit nach Anspruch 5, dadurch gekennzeichnet, daß die Positionierelemente jeweils als axialer und/ oder radialer Bund und die Aufnahmelemente als Nuten und/ oder Stege ausgebildet sind.

7. Linearführungseinheit nach einem der vorstehenden Ansprüche, dadurch gekennzeichnet, daß der Laufwagen (4) jeweils stirnseitig gegenüber dem Führungslineal (2) bzw. den Führungsbahnen (20) gegen eindringende feste und/oder flüssige Partikel abgedichtet ist.

8. Linearführungseinheit nach Anspruch 7, dadurch gekennzeichnet, daß der Laufwagen (4) auf das Führungslineal (2) bzw. die Führungsbahnen (20) ausgerichtete Abstreifer, vorzugsweise in Form von Bürsten, besitzt.

9. Linearführungseinheit nach einem der vorstehenden Ansprüche, dadurch gekennzeichnet, daß die Führungsbahnen (20) als kreiszylinderförmige Stäbe ausgeführt und in Nuten mit rechteckförmigem Querschnitt in das Führungslineal (2) eingesetzt sind.
